Europäisches Patentamt

European Patent Office

Office européen des brevets

(11) Veröffentlichungsnummer: **0 172 435**
**B1**

(12) **EUROPÄISCHE PATENTSCHRIFT**

⑩

(12)

(45) Veröffentlichungstag der Patentschrift:
29.06.88

(21) Anmeldenummer: 85109252.8

(22) Anmeldetag: 24.07.85

(51) Int. Cl.⁴: **B 23 P 15/26,** B 21 D 39/06

(54) **Werkzeugmaschine zur Verbindung von Rohren und Rohrböden eines Wärmetauschers.**

(30) Priorität: 23.08.84 DE 3430964

(43) Veröffentlichungstag der Anmeldung:
26.02.86 Patentblatt 86/9

(45) Bekanntmachung des Hinweises auf die Patenterteilung:
29.06.88 Patentblatt 88/26

(84) Benannte Vertragsstaaten:
DE FR GB IT

(56) Entgegenhaltungen:
CH-A-472 920
DD-A-120 146
DE-A-3 046 467
DE-A-3 301 449
DE-B-2 816 222
US-A-2 822 853
US-A-4 229 642

(73) Patentinhaber: **Th. Kieserling & Albrecht GmbH &
Co., Birkenweiher 66, D-5650 Solingen 1 (DE)**

(72) Erfinder: **Daniels, Manfred, Dültgenstaler Strasse
81, D-5650 Solingen (DE)**
Erfinder: **Trimborn, Helmut, Mautpfad 23, D-4018
Langenfeld (DE)**

**Beschreibung**

Die Erfindung bezieht sich auf eine Werkzeugmaschine zur Verbindung von Rohren und Rohrböden eines Wärmetauschers. Wärmetauscher für stationäre Anlagen bestehen meist aus einem Bündel von Rohren, die durch eine Mehrzahl von siebartigen Zwischenböden auf Abstand gehalten werden. Die zwei äußersten Böden werden mit den Rohrenden durch Verschweißen und/oder Einwalzen dicht verbunden. Im Vorfeld der eigentlichen Schweißoperation sind einige Arbeitsgänge, wie positionieren, abfräsen und aufweiten, erforderlich. Nach der Schweißoperation wird das Rohrende in den Rohrboden eingewalzt. Eine zuverlässige Dichtigkeit von Rohrboden und Rohr ist dabei notwendig. Die für das Walzen und Schweißen erforderlichen Maschinen haben einen hohen technischen Stand erreicht, so daß diese Arbeitsoperationen an sich bei Einhaltung bestimmter Voraussetzungen als unproblematisch angesehen werden können.

Die Verbindung von Rohrboden und Rohrende mit den oben beschriebenen Einzeloperationen wurde bisher im wesentlichen von Hand durchgeführt und bereitet technologisch keine grundsätzlichen Schwierigkeiten mehr. Derartige Wärmetauscher haben häufig mehrere hundert Rohre, so daß die Verbindung der einzelnen Rohrenden mit den einzelnen Rohrböden einen erheblichen Arbeitsaufwand darstellt.

Aus der CH-A-472 920 ist eine Reparatur - Vorrichtung bekannt, mit der einzelne defekte Rohre eines Wärmetauschers herausgefunden und durch Verschließen repariert werden können. Die dortige Verfahrensweise läuft so ab, daß zunächst das defekte Rohr gesucht wird, ein Pfropf eingesetzt wird und der Pfropf am Rohrende verschweißt wird. Bei ausreichender Dimensionierung des Wärmetauschers kann auf einige nach der Reparatur "blinde" Rohre verzichtet werden. Für diese Arbeitsgänge sind auf einem als Revolverkpf ausgebildeten Werkzeugträger mehrere Werkzeuge vorgesehen, die nacheinander in Arbeitsstellung geschwenkt werden. Die Werkzeuge können über die gesamte Stirnfläche des Wärmetauschers bewegt werden. Es ist nicht gezeigt, wie die Bewegung des Werkzeugträgers oder Wärmetauschers von einem Rohrboden mit dem ersten Rohrende zum anderen Rohrboden mit dem zweiten Rohrende erfolgt.

Aus der DE-A-33 01 449 ist eine Schweißvorrichtung für Motorradrahmen bekannt, in der einzelne Teile des Rahmens automatisch verschweißt werden. Der Motorradrahmen wird auf einem wagenartigen Einspannträger festgespannt und auf Schienen in einen Schweißroboter hineingefahren, verschweißt und zur anderen Seite wieder herausgefahren. Die Schweißvorrichtung arbeitet mit zwei Einspannträgern, einem oberen und einem unteren, wobei der untere Einspannträger zwischen der Zuführseite und dem Roboter hin-und herpendelt und der obere Einspannträger zwischen dem Roboter und der Ausgangsseite pendelt. Die einzelnen Schweißaggregate verbinden die Rahmenteile von der Längsseite des Rahmens her und der Rahmen wird zum Schweißen an verschiedenen Stellen im Bereich des Roboters gehoben, gesenkt und gewendet, bevor er schließlich am oberen Einspannträger befestigt, den Bereich des Roboters zur Ausgangsseite hin verläßt.

Der Erfindung liegt die Aufgabe zugrunde, eine Werkzeugmaschine zum Verbinden der Rohre und Rohrböden eines Wärmetauschers so zu gestalten, daß eine Bearbeitung beider Rohrenden und Rohrböden an den Stirnseiten des Wärmetauschers mit einem Werkzeugträger möglich wird.

Die Lösung dieser Aufgabe ist im Anspruch 1 wiedergegeben. Das Arbeitsprinzip läßt sich vereinfacht so darstellen, daß nach erfolgter Verbindung des einen Rohrbodens mit den Rohrenden, der Werkzeugträger zur Seite gefahren wird, der Wärmetauscher fährt mit Hilfe der Schleppvorrichtung an dem Werkzeugträger vorbei und wird anschließend in seine Bearbeitungsposition hinter den vorbeigefahrenen Wärmetauscher zurückbewegt. Der Wärmetauscher steht dann ohne Wendung auf der anderen Seite des Werkzeugträgers. Die Schleppvorrichtung erlaubt einen kontinuierlichen Transport des Wärmetauschers durch die gesamte Fertigung. Die in der Fertigung befindlichen Wärmetauscher können wie ein Eisenbahnzug in einer Richtung vorgeschoben werden.

Alternativ kann der Werkzeugträger schwenkbar ausgebildet sein oder einen doppelten Satz Werkzeuge für die Bearbeitung der rückwärtigen Stirnseite des Wärmetauschers aufweisen. Damit können einander gegenüber liegende Stirnseiten des gleichen Wärmetauschers in Folge bearbeitet werden. Der Werkzeugträger nimmt eine Mehrzahl von individuell gesteuerten Werkzeugen zum Fräsen, Aufweiten, Schweißen und Einwalzen auf, die nacheinander zum Einsatz kommen. In jedem Falle wird jedes Rohr, das an seinem ersten Längsende bearbeitet wird, durch Spannen gegen Verdrehung gesichert.

Bei der Verwendung eines doppelten Satzes von Werkzeugen kann, eine ausreichende Präzision der Positionierung der Rohrenden und Rohrböden vorausgesetzt, gleichzeitig der rückwärtige Rohrboden eines ersten Wärmetauschers und der vordere Rohrboden eines zweiten Wärmetauschers bearbeitet werden.

Die besonderen Vorzüge der erfindungsgemäßen Lösung ergeben sich bei der Verwendung einer CNC - Steuerung für den bzw. die Werkzeugträger, weil dann ein einmal gespeichertes Lochbild eines Rohrbodens, ohne individuelles Einführen der Werkzeuge in die einzelnen Rohre von Hand, automatisch erfolgen kann.

Bevorzugt ist eine Ausführung der Erfindung gem. Anspruch 2 vorgesehen. Dabei wird die Relativbewegung zwischen Wärmetauscher und Werkzeugmaschinenrahmen von dem Wärmetauscher durchgeführt. Letzterer benötigt zur Positionierung seiner noch nicht verschweißten Teile ohnehin ein Aufnahmegestell, auf das die einzelnen Elemente des Wärmetauschers in Aufnahmen vorpositioniert sind. Bevorzugt ist vorgesehen, das Aufnahmegestell auf einem Wagen anzuordnen.

Ein Weiterbildendes Merkmal der Erfindung ist in Anspruch 3 wiedergegeben. Die portalartige Ausführung des Maschinenrahmens führt zu einer steifen Ausbildung der Werkzeugmaschine und bietet die Möglichkeit, die einzelnen, mit dem Rohrboden zu verschweißenden Rohre präzise anzufahren, obwohl aufgrund der Ausweichbewegung der Werkzeugträger weite Verfahrwege der Werkzeuge nicht zu vermeiden sind. Vorzugsweise ist vorgesehen, den Werkzeugträger nach oben ausweichen zu lassen. Das erfordert weniger Platz im Grundriß der Maschine und die verfahrbare Traverse mit dem bzw.- den Werkzeugträgern wird kürzer und dadurch steifer.

Die bevorzugte Ausführungsform der Erfindung ist in der Verwendung eines einzigen Werkzeugsatzes für die Bearbeitung beider Rohrböden, bzw. der darin einzuarbeitenden Rohrenden zu sehen, wie dies mit Anspruch 4 verfolgt wird. Der bauliche Mehraufwand für das Schwenken des Werkzeugsatzes zur Bearbeitung gegenüberliegender Seiten des Wärmetauschers ist kleiner anzusetzen als der Mehraufwand für den doppelten Werkzeugsatz, dessen Unterbringung mehr Raum und Verfahrweg erfordert.

Die mit Anspruch 5 verfolgte Weiterbildung der Erfindung konkretisiert die letztgenannte Anordnung und Ausbildung des Maschinenrahmens dahingehend, daß der Wärmetauscher längs durch das Portal des Maschinenrahmens hindurchgeschoben wird.

In jedem Falle wird bei der Ausgestaltung der Erfindung gemäß Anspruch 6 für die Bearbeitung beider Rohrböden nur eine Spanneinrichtung benötigt, die ausschließlich zur Befestigung der Rohre an dem zuerst bearbeiteten Rohrboden zum Einsatz kommt, da bei der Befestigung des zweiten Rohrbodens ein Verdrehen oder axiales Verschieben einzelner Rohre nicht zu befürchten ist.

Die Spanneinrichtung ist auf der den Bearbeitungswerkzeugen gegenüber liegenden Seite des Wärmetauschers angeordnet. Auf dieser Seite des Wärmetauschers sind alle Rohre von innen oder stirnseitig spannbar und gut zugänglich und die Bearbeitungseinheit mit dem Maschinenrahmen wird von der Spannvorrichtung nicht behindert, obwohl diese am gleichen Rohr bzw. an den gleichen Rohren wie die Bearbeitungswerkzeuge angreift.

Um einen durchgängigen axialen Transport der Wagen mit den nicht oder teilweise verschweißten Wärmetauschern zu ermöglichen, ist in Weiterbildung der Erfindung die Ausgestaltung gem. Anspruch 7 vorgesehen. Die Spannvorrichtung hat einen eigenen Maschinenständer, der beim Anfahren der einzelnen Rohrenden in den Rohrböden und beim Freigeben der Bahn für die Wagen mit dem jeweiligen Wärmetauscher die gleichen Bewegungen ausführt, wie der Werkzeugträger. Er benötigt somit keinen nennenswerten eigenen Steuerungsaufwand. Der Maschinenständer ist auf zusätzlichen Schienen neben den Schienen des Wagens für den Wärmetauscher verfahrbar, hat einen Kragarm, der über den Wärmetauscher greift und besitzt einen an dem Kragarm geführten Support, der hinter den Rohrboden mit den noch nicht verschweißten Rohrenden führt und die auf der gegenüberliegenden Seite des Wärmetauschers gerade aufzuweitenden Rohre auf seiner Seite, vorzugsweise von innen oder stirnseitig einspannt.

Die Weiterbildung der Erfindung gem. Anspruch 8 trägt den Besonderheiten einer Bearbeitung eines langen Werkstücks auf seinen zwei einander gegenüberliegenden Schmalseiten im besonderen Maße Rechnung. Der Wärmetauscher wird von der Schleppvorrichtung von der einen Seite auf die andere Seite des Maschinenständers transportiert. Für beide Positionen des Wärmetauschers ist je eine Haltevorrichtung und ein Anker vorgesehen.

Die Weiterbildung der Erfindung nach Anspruch 9 erlaubt es, den Spannwerkzeugen zusätzlich die Aufgabe der axialen Positionierung der noch nicht verschweißten Rohre zu übertragen. Zunächst wird ein Rohr innen oder stirnseitig gespannt, dann vorgeschoben gegen einen Anschlag auf der in der Bearbeitung befindlichen Seite des Wärmetauschers und verharrt in dieser Position bis die Lage eines jeden Rohres im Wärmetauscher fixiert ist.

Die Erfindung wird im einzelnen anhand der Zeichnung näher erläutert. Dabei zeigen :

Fig. 1 : Die Werkzeugmaschine in einer Seitenansicht

Fig. 2: eine bevorzugte Ausführungsform des Maschinenrahmens im verkleinerten Maßstab

Fig. 3: eine weitere mögliche Ausführungsform des Maschinenrahmens in einem Maßstab wie Fig. 3

Fig. 4: eine Ausführung des Werkzeugträgers mit einem doppeltem Satz an Werkzeugen.

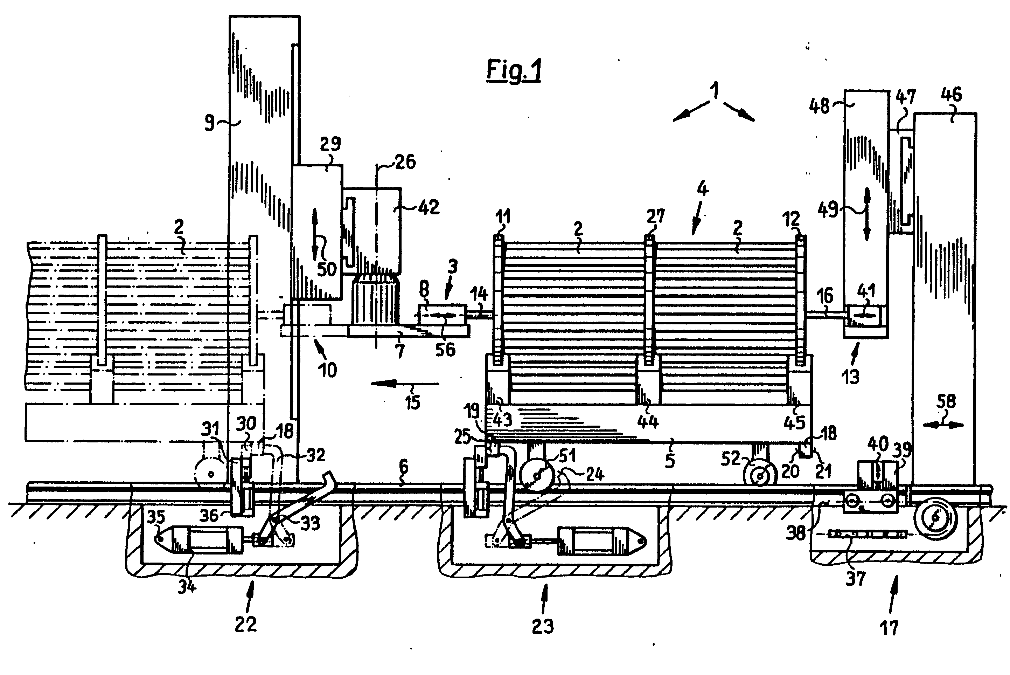

Fig. 1 zeigt eine Werkzeugmaschine 1, mit einem Maschinenrahmen 9, einer Spanneinrichtung 13 und Schienen 6 für einen zwischen diesen befindlichen Wagen 5 mit einem darauf angeordneten Wärmetauscher 4.

Der Maschinenrahmen 9 trägt eine Traverse 29, auf der ein Support 42 geführt ist. Im Support 42 ist ein Werkzeugträger 7 um eine senkrechte Achse 26 schwenkbar gelagert. Der Schwenkwinkel beträgt 180°. Die Endlagen der Schwenkung bilden je eine Arbeitsstellung 3, 10. Auf dem Werkzeugträger 7 sind Werkzeuge 8 angeordnet, die in Richtung des Pfeiles 56 verfahrbar sind. Das sind Aufweitewerkzeuge zum Einwalzen der Rohrenden in die Rohrböden 11, 12, Fräswerkzeuge zur Ablängung der Rohre 2 für die Schweißung und Schweißpistolen zum Verschweißen der Rohre mit den Rohrböden. Der Werkzeugträger ist durch die Traverse gem. Pfeil 50 in vertikaler Richtung und den in waagerechter Richtung an der Traverse 29 verfahrbaren Support 42 über die gesamte Querschnittsfläche des Wärmetauschers 4 und darüberhinaus aus der Bahn 15 des Wärmetauschers heraus verfahrbar.

Der Wärmetauscher 4 besteht aus Rohren 2 und Rohrböden 11 und 12, sowie einem Zwischenboden 27. Vor der Bearbeitung sind die Rohre 2 lose in die Böden 11, 12 und 27 eingesteckt. Aufnahmen 43, 44 und 45 gewährleisten bei dem in sich noch instabilen Wärmetauscher 4 die für die Verschweißung und deren Vorbereitung notwendige Positionierung der Rohrböden. Die Aufnahmen sind fest mit einem Wagen 5 verbunden, der auf Rädern 51, 52 und Schienen 6 verfahrbar ist.

Der Wärmetauscher 4 wird durch die Werkzeugmaschine 1 in Richtung seiner Längserstreckung hindurchgefahren.

Der Wagen 5 hat im Bereich seiner beiden Längsenden je einen Anker 18, 19, mit deren Hilfe er bei der Bearbeitung von vorderem und hinterem Rohrboden in Position gebracht wird. Die Anker sind gleichartig und haben je zwei Anschläge 20, 21, wobei während des Transports der ausgefahrene Mitnehmer 40 gegen den Anschlag 21 zur Anlage kommt.

Die Positionierung des Wagens 5 mit dem Wärmetauscher 4 erfolgt durch die Spannvorrichtungen 22, 23. Die Spannvorrichtungen sind untereinander gleich. Sie bestehen aus einer ortsfesten Stütze 31, über die die Anker 18, 19 mit geringem Zwischenraum hinwegfahren können. Einlaufseitig vor jeder Stütze 31 ist ein über die Stütze hinausfahrbarer Riegel 30 vorgesehen, der in den Bereich der Anker 18, 19 ragt und in einer vom Zylinder 36 bewirkten, in Fig 1 gezeigten, ausgefahrenen Stellung den Wagen 5 an der Weiterfahrt hindert. Sobald der Wagen 5 mit einem Anker gegen einen Riegel 30 gefahren ist, klappt ein bei 33 drehbar gelagerter Spannhebel 32 hoch, der den Anker gegen den Riegel drückt und somit eine sichere Positionierung des Wagens und damit verbunden des Wärmetauscher 4 bewirkt. Die Bewegung des Spannhebels und die sichere Spannung des Ankers erfolgt durch einen Zylinder 34, der bei 35 ortsfest gelagert ist. Zur Weiterfahrt des Wagens 5 werden Spannhebel und Riegel abgesenkt und der Mitnehmer 40 kann den Wagen 5 weiter schleppen bis dieser erneut gegen einen Riegel 30 fährt oder außerhalb der Werkzeugmaschine in nicht dargestellter Weise transportiert wird.

Der Werkzeugträger 7 ist in Arbeitsstellung auf einer Stirnseite des Wärmetauschers 4 angeordnet. Bei der Bearbeitung der ersten Stirnseite des Wärmetauschers 4 werden die einzelnen, gerade in Bearbeitung befindlichen Rohre auf der gegenüberliegenden Seite des Wärmetauschers 4 von einer Spanneinrichtung 13 gehalten. Entsprechend dem in Arbeit befindlichen Werkzeugsatz auf dem Werkzeugträger 7 sind auf der Spanneinrichtung 13 Spannwerkzeuge 16 angordnet, die parallel zu den Werkzeugen 8 gesteuert werden.

Die Spanneinrichtung 13 besteht aus einem Maschinenständer 46, an dem eine in Querrichtung verfahrbare Spanntraverse 47 geführt ist, die ihrerseits einen in vertikaler Richtung 49 verfahrbaren Spannsupport 48 trägt, der an seinem nach unten gerichteten Ende mit den Spannwerkzeugen 16 ausgerüstet ist. Der Maschinenständer 46 ist in Richtung des Pfeiles 58 zur Anpassung der Werkzeugmaschine an unterschiedliche Längen der Wärmetauscher verfahrbar.

Die Verfahrbarkeit der Spannwerkzeuge 16 ist gleichartig mit der der Werkzeuge 8; dies gilt auch für die Möglichkeit, dem Wärmetauscher 4 auszuweichen, um ihn vorbeifahren zu lassen. Die Spannvorrichtung ist jedoch nicht schwenkbar im Sinne der vom Werkzeugträger 7 um die Achse 26 durchzuführenden Schwenkbewegung, da er nur bei der Bearbeitung des einlaufseitigen Rohrbodens 11 benötigt wird und weil eine Einspannung und Positionierung der Rohre bei der Bearbeitung des rückwärtigen Rohrbodens nicht mehr sinnvoll ist.

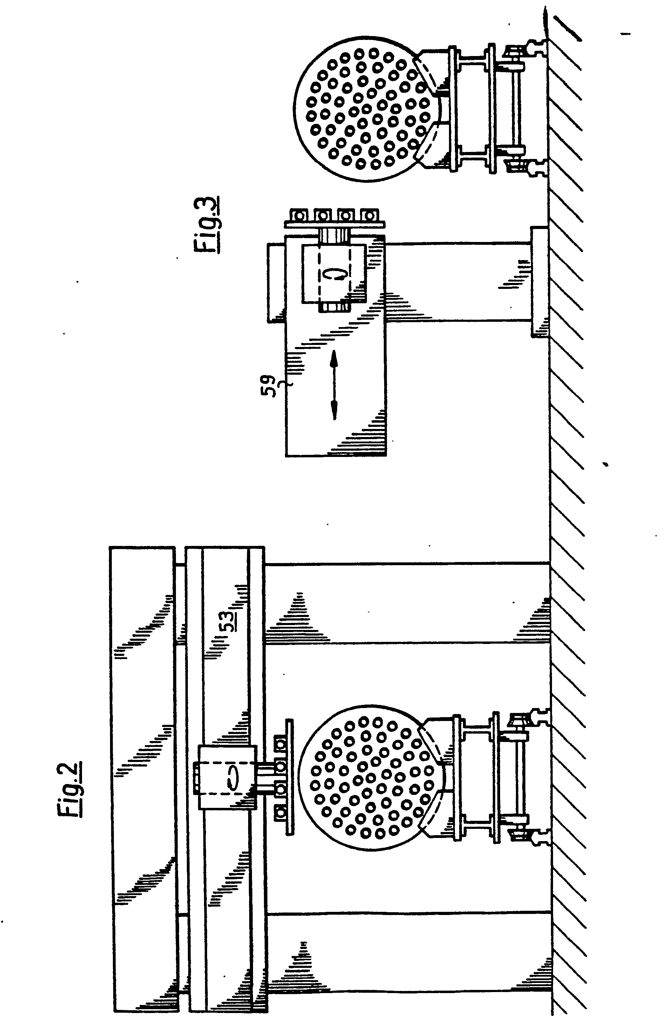

Wie in den Fig. 2 und 3 gezeigt, kann der Maschinenrahmen 9 unterschiedlich ausgeführt sein. In Fig. 2 ist er als Portal ausgebildet, in Fig. 3 ist eine Ausführung in Einständerbauweise gezeigt. Die Portalbauweise hat den Vorteil größerer Steifigkeit und wird deshalb bevorzugt. Der erfindungsgemäße Lösungsgedanke ist jedoch auch mit der Einständerbauweise realisierbar. Entscheiden ist, daß in allen Fällen die Traversen 29, 53 und 59 mit den Werkzeugträgern 7 und 54 dem vorbeifahrenden Wärmetauscher 4 ausweichen können.

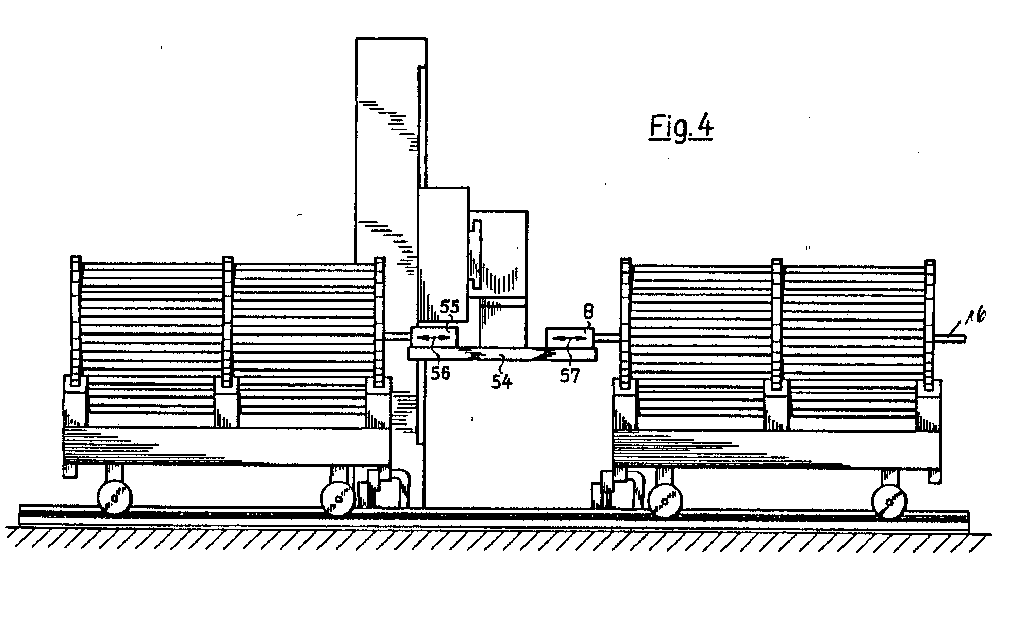

Die in Fig. 4 gezeigte Ausführungsform zeigt einen Werkzeugträger 54, der nicht schwenkbar ist und der zusätzlich zu den Werkzeugen 8 einen weiteren Satz Werkzeuge 55 trägt. Damit können bei entsprechend genauer Positionierung der Rohrböden zwei Wärmetauscher gleichzeitig bearbeitet werden. Auch bei dieser Ausführung sind sämtliche Werkzeuge einzeln oder in Gruppen gleichartiger Werkzeuge in axialer Richtung gem. den Pfeilen 56 und 57 verfahrbar.

Die Arbeitsweise der Werkzeugmaschine ist wie folgt: Die Spannwerkzeuge 16 sind aus der Bahn 15 des Wärmetauschers 4 herausgefahren. Der Wärmetauscher 4 wird von einer nicht gezeigten Transportvorrichtung in den Bereich der Werkzeugmaschine 1 gebracht. Die Schleppvorrichtung 17 übernimmt den Wagen 5 mit dem Wärmetauscher 4 und bringt ihn in die Position zwischen dem Maschinenrahmen 9 und der Spanneinrichtung 13. Dort wird der Wagen durch die Spannvorrichtung 23 positioniert. Nach erfolgter Positionierung werden die Werkzeuge 8 und die Spannwerkzeuge 16 ausgerichtet. Dabei wird ihre Ausrichtung in Übereinstimmung mit dem Lochbild der Rohrböden 11, 12 gebracht. Es werden jeweils nur einzelne oder kleine Gruppen von Rohrenden gleichzeitig mit den Rohrböden verschweißt. Die Werkzeuge 8 und die Spannwerkzeuge 16 werden parallel gesteuert. Das Rohr, das an seinem einlaufseitigen Ende eingewalzt wird, wird an seinem auslaufseitigen Ende in der gewünschten Position festgespannt. Die einzelnen Rohrenden können automatisch oder von Hand angesteuert werden. Dieser Vorgang wiederholt sich, bis alle Rohrenden mit dem ersten, einlaufseitigen Rohrboden 11 verschweißt sind. Anschließend werden alle Werkzeuge aus der Bahn 15 des Wärmetauschers 4 und des Wagens 5 herausgefahren bis sie das Profil von Wagen und Wärmetauscher 4 freigeben. Der Wagen wird anschließend vom Mitnehmer 40 in die Position hinter dem Maschinenrahmen 9 gebracht, wie dies in Fig. 1 in dünnen Linien gezeigt ist. Dabei fährt der Wagen mit dem Wärmetauscher 4 an dem Maschinenrahmen 9 mit dem Werkzeugträger 7 vorbei.

Der Wagen wird von der Spannvorrichtung 22 in die vorbestimmte Lage gebracht. Der Werkzeugträger 7 wird um 180° geschwenkt und abgesenkt. Die so für die Bearbeitung der rückwärtigen Stirnseite in ihre Arbeitsposition zurückgebrachten Werkzeuge 8 führen dann in der beschriebenen Weise das Einwalzen und Verschweißen der Rohrenden durch.

Während der Bearbeitung der rückwärtigen Stirnseite des Wärmetauscher 4 wird bereits der nächste, lose zusammengesteckte Wärmetauscher 4 in die soeben frei gewordene Stellung zwischen dem Maschinenrahmen 9 und dem Maschinenständer 46 gebracht. Während der Bearbeitung der Rückseite des ersten Wärmetauschers kann bereits die Anpassung der Spannwerkzeuge an die Lage des Lochbildes des zweiten Wärmetauschers vorgenommen werden und bei automatischer, CNC-gesteuerter Arbeitsweise dieses Lochbild und seine Lage gespeichert werden.

Nach Abschluß der Bearbeitung des rückwärtigen Rohrbodens 12 des ersten Wärmetauschers wird der Werkzeugträger 7 zurückgeschwenkt und kann nach der vorab gespeicherten Lochanordnung im Rohrboden des nächsten Wärmetauschers mit der eigentlichen Bearbeitung sofort beginnen.

Bei der in Fig. 4 gezeigten Verwendung eines doppelten Satzes von Werkzeugen 8 und 55 muß eine konstante Positionierung des Lochbildes gewährleistet sein. Dann können ohne Einrichtung des Werkzeugträgers 7 und der Spannwerkzeuge 16 im Einzelfall gleichzeitig der einlaufseitige Rohrboden eines zweiten Wärmetauschers 4 und der auslaufseitige Rohrboden eines ersten Wärmetauschers 4 bearbeitet werden.

**Patentansprüche**

1. Werkzeugmaschine (1) zur Verbindung von Rohren (2) und Rohrböden (11, 12) eines Wärmetauschers (4), die die folgenden Merkmale aufweist:

a$_2$) einen Wagen (5) zur Aufnahme von lose ineinander gefügten Rohren und Rohrböden für einen Wärmetauscher (4),

b) Schienen (6), auf denen der Wagen (5) verfahrbar ist,

c) einen Werkzeugträger (7) für Aufweite-, Schweiß- und andere Werkzeuge (8), der an einem Maschinenrahmen (9) beweglich geführt ist,

d$_2$) Der Werkzeugträger (7) ist relativ zum Wärmetauscher (4) in Querrichtung zur in Arbeitsstellung befindlichen Werkzeuglängsachse (14) verfahrbar,

e$_2$) in der äußersten Stellung des Querverfahrweges ist der Werkzeugträger (7) mit den Werkzeugen (8) außerhalb des Profils des Wärmetauschers (4) angeordnet, um die Bewegung des Wagens mit dem aufgesetzten Wärmetauscher (4), vorbei an dem Werkzeugträger (7) in seine neue Arbeitsstellung zu ermöglichen,

f) der Werkzeugträger (7) mit den Werkzeugen (8) und der Wärmetauscher (4) sind in Längsrichtung des Wärmetauschers relativ zueinander verfahrbar,

g) die Werkzeuge (8) haben 2 um 180° gegeneinander verschwenkte Arbeitsstellungen (10) zur Bearbeitung beider Rohrböden (11, 12),

w) jedes Rohr wird bei der Bearbeitung jedes ersten Rohrendes festgespannt,

r$_2$) eine Schleppvorrichtung (17) für den Wagen (5) mit dem Wärmetauscher (4), mit der der Wagen (5) nach der Bearbeitung des ersten Rohrbodens am Maschinenrahmen (9) vorbeigezogen wird,

2. Werkzeugmaschine nach Anspruch 1, gekennzeichnet durch das folgende Merkmal:

h) der Maschinenrahmen (9) ist ortsfest,

3. Werkzeugmaschine nach Anspruch 2, gekennzeichnet durch das folgende Merkmal:

i) der Maschinenrahmen (9) ist portalartig ausgebildet und weist eine höhenverstellbare Traverse (29) mit dem Werkzeugträger (7) auf,

4. Werkzeugmaschine nach Anspruch 1, gekennzeichnet durch das folgende Merkmal:

l) der Werkzeugträger (7) ist in einer Längsebene der Werkzeuge um 180° schwenkbar,

5. Werkzeugmaschine nach Anspruch 3, gekennzeichnet durch das folgende Merkmal:

m) der portalartige Maschinenrahmen (9) übergreift die Schienen (6) und die Wagenbahn (15) des Wärmetauschers (4),

6. Werkzeugmaschine nach Anspruch 1, gekennzeichnet durch das folgende Merkmal:

n) eine Spannvorrichtung (13) für die in der Bearbeitung befindlichen Rohre (2),

o) die Spannvorrichtung (13) ist auf der dem Wagen (5) gegenüber liegenden Seite des Maschinenrahmens (9) angeordnet,

7. Werkzeugmaschine nach Anspruch 1, gekennzeichnet durch das folgende Merkmal:

p) die Spannvorrichtung (13) ist wie der Werkzeugträger (7) querverfahrbar,

q) die Spannvorrichtung (13) hat axial verfahrbare (28) und gegen Drehung gesicherte Spannwerkzeuge (16) ,

8. Werkzeugmaschine nach den Ansprüchen 1 und 4, gekennzeinet durch die folgenden Merkmale:

s) zwei Anker (18, 19) mit Anschlägen (20, 21) an gegenüberliegenden Längsenden des Wagens (5) ,

t) zwei Spannvorrichtungen (22, 23) für die Anker (18, 19) mit je zwei Anschlägen (24, 25), beidseits der Bearbeitungsquerebene, die durch die Schwenkachse (26) des Werkzeugträgers (7) geht,

u) die Anker (18, 19) einerseits und beide Anschläge (24, 25) und den Spannvorrichtungen (22, 23) andererseits sind relativ zueinander in einer Querebene zum Wärmetauscher (4) beweglich,

9. Werkzeugmaschine nach Anspruch 1, gekennzeichnet durch das folgende Merkmal:

v) der Werkzeugträger (7) weist zwischen zwei und zehn Werkzeuge (8) auf, von denen jedes einzeln oder Gruppen von gleichartigen Werkzeugen, separat steuerbar sind.

**Claims**

1. Machine tool for joining tubes and end-plates of a heat exchanger, comprising the following features:

$a_2$) a carriage (5) for receiving loosely assembled tubes and end-plates for a heat exchanger (4),

b) the carriage (5) being movable on rails (6),

c) a tool holder (7) for expanding-, welding- and other tools (8), the toolholder being guided on a machine frame (9),

$d_2$) the toolholder (7) being movable relative to the heat exchanger transversely of the longitudinal axis (14) of the tools located in their working position,

$e_2$) in an ultimate position of the transverse movement, the toolholder (7) with the tools (8) is positioned outside the path of the heat exchanger, in order to allow the movement of the heat exchanger passing by the toolholder into its second working position,

f) the toolholder (7), the tools (8) and the heat exchanger (4) are movable relative to each other along the longitudinal axis of the heat exchanger,

g) the tools (8) have got two working positions (10) in opposite directions for machining both end-plates (11, 12),

w) each tube is clamped during the machining operation of its first end,

$r_2$) a transport device (17) for the carriage (5) with the heat exchanger (4) on it, to advance the carriage past the machine frame (9) after the machining operation of the first tube ends,

2. Machine tool according to claim 1, characterized by the following feature:

h) the machine frame (9) is in a fixed position,

3. Machine tool according to claim 2, characterized by the following feature:

i) the machine frame (9) is of portal design and comprises a traverse frame member (29) being movable in a vertical direction and supporting the toolholder (7),

4. Machine tool according to claim 1, characterized by the following feature:

l) the toolholder (7) is rotatable 180° in a longitudinal plane of the tools,

5.) Machine tool according to claim 3, characterized by the following feature:

m) the portal-type machine frame (9) straddles the rails (6) and the path (15) of the heatexchanger,

6. Machine tool according to claim 1, characterized by the following features:

n) a clamping device (13) for the tubes (2) during the machining operation,

o) the clamping device (13) and the machine frame (9) are located on opposite sides of the carriage (5),

7. Machine tool according to claim 1, characterized by the following features:

p) the clamping device (13) and the toolholder (7) are both transversely movable,

q) the clamping device (13) has got axially movable (28) clamping tools (16), being secured against rotational movement,

8. Machine tool according to claims 1 and 4, characterized by the following features:

s) two stop means (18, 19) with abutments (20, 21) on opposite longitudinal ends of the carriage (5),

t) two clamping devices (22, 23) for the stop means (18, 19) with two abutments each, on opposite sides of a transverse plane in which the machining operation takes place, this transverse plane including the rotational axis (26) of the toolholder (7),

u) the stop means (18, 19) on the one hand and both abutments (24, 25) of the clamping devices (22, 23) on the other hand are movable relative to each other in the same transverse plane of the heat exchanger (4),

9. Machine tool according to claim 1, characterized by the following feature:

v) the toolholder (7) comprises two to ten tools (8), each of which or groups of equivalent tools being separately controlable.

**Revendications**

1. Machine-outil (1) pour l'assemblage des tubes (2) et des plaques tubulaires (3) d'un échangeur de chaleur (4), caractérisée en ce qu'elle comporte un chariot (5) qui porte, engagés les uns dans les autres sans être fixés, les tubes et les plaques tubulaires destinés à un échangeur de chaleur (4), des rails (6) sur lesquels le chariot (5) peut se déplacer, un porte-outils (7) sur lequel sont montés des outils d'élargissement, de soudage ou à d'autres usages, et qui est guidé dans ses déplacements sur un cadre de machine (9), en ce que le porte-outils (7) peut se déplacer par rapport à l'échangeur de chaleur (4) dans le sens transversal par rapport à l'axe longitudinal (14) de l'outil en position de travail, en ce que, dans la position extrême qu'il atteint sur son trajet dans le sens transversal, le porte-outil (7) et les outils (8) se trouvent à l'extrémité du contour de l'échangeur de chaleur (4), de manière à permettre au chariot portant l'échangeur de chaleur (4) de passer devant le porte-outils (7) pour se placer dans sa nouvelle position de travail, en ce que le porte-outils (7) portant les outils (8) et l'échangeur de chaleur (4) peuvent se déplacer l'un par rapport à l'autre dans le sens de la longueur de l'échangeur de chaleur, en ce que les outils (8) peuvent occuper des positions de travail (10) qui diffèrent l'une de l'autre par un pivotement de 180° pour effectuer les opérations nécessaires sur les deux plaques tubulaires (11, 12), en ce que chaque tube est bloqué pour l'opération à effectuer sur chaque première extrémité de tube, en ce que le chariot (5) portant l'échangeur de chaleur (4) est associé à un dispositif d'entraînement (17) qui, lorsque les opérations nécessaires ont été effectuées sur la première plaque tubulaire, déplace le chariot (5) par rapport au cadre (9) de la machine.

2. Machine-outil selon la revendication 1, caractérisée en ce que le cadre (9) de la machine est fixe.

3. Machine-outil selon la revendication 2, caractérisée en ce que le cadre (9) de la machine a la forme d'un portique et comporte une traverse (29) réglable en hauteur et portant le porte-outils (7).

4. Machine-outil selon la revendication 1, caractérisée en ce que le porte-outils (7) peut pivoter de 180° autour d'un plan longitudinal des outils.

5. Machine-outil selon la revendication 3, caractérisée en ce que le cadre (9) de la machine englobe les rails (6) et le trajet de déplacement (15) du chariot portant l'échangeur de chaleur (4).

6. Machine-outil selon la revendication 1, caractérisée en ce qu'elle comporte un dispositif de blocage (13) des tubes (2) soumis aux opérations nécessaires, et en ce que ce dispositif de blocage (13) est situé du côté du cadre (9) de la machine qui fait place au chariot (5).

7. Machine-outil selon la revendication 1, caractérisée en ce que le dispositif de blocage (13) peut, comme le porte-outils (7), se déplacer dans le sens transversal et en ce que le dispositif de blocage (13) comporte des outils de blocage (16) qui peuvent se déplacer dans le sens axial (28) et ne risquent pas l'allongement.

8. Machine-outil selon les revendications 1 et 4, caractérisée en ce qu'elle comprend deux dispositifs d'ancrage (18, 19) comportant des butées (20, 21) aux extrémités du chariot (5) opposées dans le sens longitudinal, et deux dispositifs de blocage (22, 23), pour les dispositifs d'ancrage (18, 19), comportant chacun deux butées (24, 25) des deux côtés du plan transversal de travail qui passe par l'axe de pivotement (26) du porte-outils (7) et en ce que les dispositifs d'ancrage (18, 19) d'une part et les deux butées (24, 25) des dispositifs de blocage (22, 23), d'autre part, peuvent se déplacer les uns par rapport aux autres dans un plan orienté transversalement par rapport à l'échangeur de chaleur (4).

9. Machine-outil selon la revendication 1, caractérisée en ce que le porte-outils (7) comporte de deux à dix outils (8) qui peuvent être commandés séparément, individuellement ou par groupes d'outils analogues.

Fig.1

Fig.2

Fig.3

Fig. 4